Europäisches Patentamt

European Patent Office

Office européen des brevets

(11) Veröffentlichungsnummer: **0 170 289**

**B1**

(12) **EUROPÄISCHE PATENTSCHRIFT**

(45) Veröffentlichungstag der Patentschrift: **07.11.90**

(21) Anmeldenummer: **85109730.3**

(22) Anmeldetag: **02.08.85**

(51) Int. Cl.⁵: **H 02 M 7/162, B 60 L 9/12**

(54) Speiseanordnung für wechselstromgespeiste Gleichstromzugantriebe.

(30) Priorität: **03.08.84 BG 66490/84**

(43) Veröffentlichungstag der Anmeldung:
**05.02.86 Patentblatt 86/06**

(45) Bekanntmachung des Hinweises auf die
Patenterteilung:
**07.11.90 Patentblatt 90/45**

(84) Benannte Vertragsstaaten:
**AT CH DE FR LI SE**

(56) Entgegenhaltungen:
**EP-A-0 007 510**
**FR-A-1 399 449**
**FR-A-2 041 567**
**FR-A-2 375 752**
**GB-A-1 060 577**
**US-A-3 849 718**
**US-A-3 886 433**

(73) Patentinhaber: **S O "BULGARSKI DARJAVNI
JELESNIZI"
Ivan Vasov Strasse 3
Sofia (BG)**

(72) Erfinder: **Staikov, Georgi Todorov, Dipl.-Ing.
Losenez-Str. 1
Sofia (BG)**
Erfinder: **Ganov, Milko Makaveev, Dipl.-Ing.
San Stefano-Strasse 4
Sofia (BG)**
Erfinder: **Borschukov, Enyu Georgiev, Dipl.-Ing.
Boul. Bulgaria 124
Sofia (BG)**
Erfinder: **Stefanov, Swetoslav Alexandrov, Dipl.-
Ing.
Ivaz Woiwoda Strasse 27
Sofia (BG)**
Erfinder: **Matov, Peter Ivanov, Dipl.-Ing.
Quartal Studentski Grad, Block 16
Sofia (BG)**
Erfinder: **Popov, Rumen Yordanov, Dipl.-Ing.
Oborischte-Str.
Sofia (BG)**

(74) Vertreter: **Ebbinghaus, Dieter et al
v. FÜNER, EBBINGHAUS, FINCK Patentanwälte
European Patent Attorneys Mariahilfplatz 2 & 3
D-8000 München 90 (DE)**

**Beschreibung**

Die Erfindung bezieht sich auf eine Speiseanordnung für wechselstromgespeiste Gleichstrom-Zugantriebe nach dem Oberbegriff des Patentanspruchs. Eine solche Speiseanordnung ist aus GB-A-1 060 577 bekannt.

Bei der bekannten Steueranordnung ist die Wechselstromquelle mit einem Ausgang eines Steuersignalgenerators verbunden, dessen erster Eingang mit dem Fahrschalter oder -pult in Verbindung steht. An einen anderen Eingang des Steuersignalgenerators ist die Sekundärwicklung des Stromtransformators angeschlossen. Zwei andere Ausgänge des Steuersignalgenerators sind mit dem Wähler bzw. einem Eingang der Steuereinrichtung verbunden. Die Ausgänge der Steuereinrichtung sind an die Steuerelektroden und an die Anoden eines jeden Thyristors des Umrichters geführt. Bei der bekannten Steueranordnung ist der Leistungsfaktor im Fahr- und im Nutzbremsbetrieb verhältnismäßig gering und der Blindleistungsverbrauch verhältnismäßig groß.

Der Erfindung liegt die Aufgabe zugrunde, eine Steueranordnung für wechselstromgespeiste Zugantriebe zu schaffen, bei deren Anwendung sowohl im Fahr- als auch im Nutzbremsbetrieb höhere Leistungskoeffizienten erzielt werden können und durch die sich in beiden Betriebszuständen des Zugantriebs die Spannung verändern läßt.

Diese Aufgabe wird erfindungsgemäß durch die im Patentanspruch beschriebene Steueranordnung gelöst.

Vorteile der erfindungsgemäßen Anordnung sind die automatische stufenlose Steuerung der Betriebsarten des elektrischen Zugantriebs und die größere Zug- und Bremskraft. Der symmetrische Sektor der umgewandelten Spannung bestimmt den Leistungsfaktor $\cos \varphi$ nach der ersten Harmonischen des Stromes auf einen Wert nahe Eins. Außerdem ermöglicht die flache Phasenregulierung enge Grenzen der Veränderung der Sektorenbreite der umgewandelten Spannung. Verbessert wird auch die Zusammensetzung der Harmonischen des Stroms des Transformators, das heißt es werden günstigere Werte des Krümmungs- oder Biegungskoeffizienten erreicht, wodurch der Leistungsfaktor der Anordnung gesteigert wird. Der ungünstige Einfluß eines in Betrieb befindlichen elektrischen Zugantriebes auf das Speisenetz und die Verschlechterung des Leistungskoeffizienten der Schienen der Zugunterstationen wird beseitigt. Infolgedessen werden auch der störende Einfluß auf die in der Nachbarschaft zum Fahrdraht angeordneten Verbindungsleitungen und Signalisiereinrichtungen, Zentralisierung und Blockierung vermindert, die Voraussetzungen zur Entstehung von Resonanzüberspannungen beseitigt sowie die Fehler der Stromzähler in den Zugunterstationen und auf den elektrischen Bahnen reduziert.

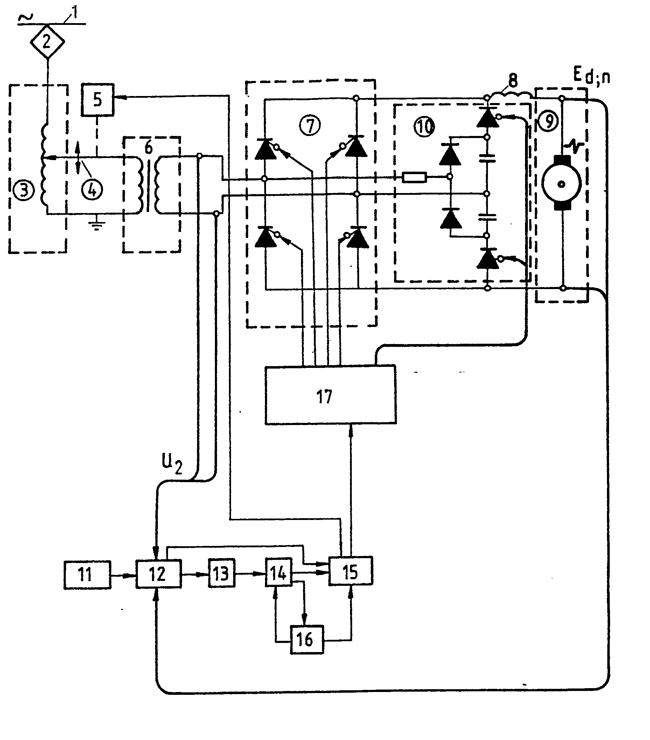

Die erfindungsgemäße Speiseanordnung wird anhand des in der Zeichnung gezeigten Ausführungsbeispiels erläutert, die das Schaltbild einer Steueranordnung zeigt.

Der den Fahrdraht 1 des Wechselstromnetzes berührende Stromabnehmer 2 einer elektrischen Lokomotive ist mit einem Spartransformator 3 verbunden. Dieser weist einen mit einem Servo-Wähler 5 mechanisch verbundenen Positionsumschalter 4 auf. An den Spartransformator 3 ist über den Positionsumschalter 4 die Primärwicklung eines Transformators 6 mit festem Übersetzungsverhältnis angeschlossen, dessen Sekundärwicklung an die Wechselstromseite eines Thyristor-Brücken-Umrichters 7 angeschlossen ist. An die Gleichstromseite des Umrichters 7 sind hintereinander eine Drossel 8 und ein Zugantrieb bzw. Fahrmotor 9 angeschlossen. Parallel zur Gleichstromseite des Umrichters 7 ist ein Zwangskommutierungsblock 10 angeschlossen, der z. B. zwei Kondensatoren aufweist und dessen Kondensatoren-Ladeseite mit der Sekundärwicklung des Transformators 6 verbunden ist.

Der Steuerteil der Speiseanordnung enthält den Fahrschalter bzw. das Fahrpult 11, dessen Ausgang mit einem ersten Eingang eines Informationsverarbeitungsblockes 12 verbunden ist. Der zweite und dritte Eingang des Informationsverarbeitungsblockes 12 ist an die Sekundärwicklung des Transformators 6 bzw. an den Anker des Fahrmotors 9 angeschlossen. Ein Ausgang des Informationsverarbeitungsblockes 12 ist an einen Steuerwinkelbestimmungsblock 13 geführt, der die Werte der Steuerwinkel an der vorderen und hinteren Front der Spannung bestimmt. Der Ausgang des Steuerwinkelbestimmungsblockes 13 ist an einen ersten Eingang eines Steuerwinkelveränderungs-Vorgabeblockes 14 angeschlossen, dessen erster Ausgang mit dem ersten Eingang eines Pufferverteilers 15 verbunden ist. Ein zweiter Ausgang des Steuerwinkelveränderungs-Vorgabeblockes 14 ist an einen Steuerwinkelbegrenzer 16 angeschlossen. Ein Ausgang des Steuerwinkelbegrenzers 16 ist an den zweiten Eingang des Steuerwinkelveränderungs-Vorgabeblockes 14 und ein zweiter Ausgang an den zweiten Eingang des Pufferverteilers 15 angeschlossen. An den dritten Eingang des Pufferverteilers 15 ist ein zweiter Ausgang des Informationsverarbeitungsblockes angeschlossen. Ein erster Ausgang des Pufferverteilers 15 ist mit dem Wähler 5 und ein zweiter Ausgang mit einem Steuerblock oder -gerät 17 verbunden. Die Ausgänge des Steuergeräts 17 sind an die Steuerelektroden der Thyristoren des Umrichters 7 und des Zwangskommutierungsblockes 10 geführt.

Die Speiseeinrichtung arbeitet wie folgt:

Fahrbetrieb: Für eine bestimmte Position des Umschalters 4 wird die Anordnung durch die Winkel der Phasenregulierung gekennzeichnet, die gleich den jeweils im Endzustand erreichten Winkeln sind. Bei einem am Fahrpult 11 gegebenen Befehl zum Übergang auf eine benachbarte Position verarbeitet der Informationsverarbeitungsblock 12 die eingegangenen Größen, nämlich die Spannung $U_2$ der Sekundärwicklung des Transformators 6 und die Vorgabe vom Fahrpult 11. Auf der Basis der vom Informationsverarbeitungsblock 12 erhaltenen Signale bestimmt der Steuerwinkelbestimmungsblock 13 die Anfangswerte der Winkel auf der vorderen und hinteren Front der Spannung und leitet sie dem Steuerwinkelveränderungs-Vorgabeblock 14 zu, der seinerseits die Information über die Winkelwerte dem Steuerwinkelbegrenzer 16 zuführt. Nachdem der Steuerwinkelbegrenzer 16 geprüft hat, ob die Winkelwerte innerhalb des erforderlichen Bereichs liegen, gibt der Steuerwinkelveränderungs-Vorgabeblock 14 über den Pufferverteiler 15 ein Signal über die Anfangswerte der Steuerung an das Steuergerät 17. Das Steuergerät 17 steuert aufgrund des erhaltenen Signals in zweckmäßiger Weise die Thyristoren des Umrichters 7 und des Zwangskommutierungsblockes 10 so, daß im Moment der Umschaltung die Spannung am Fahrmotor 9 nicht verändert wird. Danach verändern sich die Phasensteuerwinkel allmählich von ihrem anfänglichen bis zu ihrem Endwert. Auf diese Weise ändert sich die Fahrmotorspannung allmählich, bis die Spannung erreicht ist, die der neuen Position des Umschalters 4 entspricht. Bei Erreichen der Endwerte der Steuerwinkel stoppt der Steuerwinkelbegrenzer 16 den Steuerwinkelveränderungs-Vorgabeblock 14 und der Pufferverteiler 15 erlaubt dem Wähler 5 den Übergang des Umschalters 4 auf eine andere Position des Spartransformators 3, wenn diese Umschaltung vom Informationsverarbeitungsblock 12 nicht wegen Erreichens der Vorgabe verhindert wird.

Nutzbremsbetrieb: Der Leistungsteil der Schaltung ist so geschaltet, daß der Fahrmotor mit der erforderlichen Polarität arbeitet. Der Lokführer gibt mit Hilfe des Fahrschalters 11 dem Informationsverarbeitungsblock 12 die gewünschte Bremskennlinie vor. Da im Anfangsmoment dem Informationsverarbeitungsblock 12 Informationen über die Sekundärspannung $U_2$ des Transformators 6 und die elektromotorische Kraft (EMK), die gleich Null sind, und über die Geschwindigkeit bzw. Drehzahl n zugeführt werden, die von Null verschieden ist, bestimmt der Informationsverarbeitungsblock 12 die Position des Umschalters 4, bei der die zulässige Geschwindigkeit der Zunahme der Bremskraft bzw. Verzögerung erreicht wird. Über den Pufferverteiler 15 gibt der Informationsverarbeitungsblock 12 Signale zur Umschaltung des Umschalters 4 des Spartransformators 3 bis auf eine bestimmte Position. Nach Erhalt eines Signals, daß der Umschalter 4 diese Position erreicht hat, gibt der Informationsverarbeitungsblock 12 dem Steuerwinkelbestimmungsblock 13, der die Steuerwinkel auf der vorderen und hinteren Front der Spannung bestimmt, ein Signal, auf dessen Grundlage die Anfangswerte der Winkel bestimmt werden. Der Steuerwinkelveränderungs-Vorgabeblock 14 gibt die Veränderung dieser Winkel entsprechend den vom Steuerwinkelbestimmungsblock bestimmten Werten vor. Der Steuerwinkelbegrenzer 16 sorgt dafür, daß sie innerhalb der vorgegebenen Grenzen bleiben. Liegen sie innerhalb der vorgegebenen Grenzen, so gibt der Steuerwinkelbegrenzer 16

über den Pufferverteiler 15 dem Steuerwinkelveränderungs Vorgabeblock 14 die Steuerung der Thyristoren des Umrichters 7 und des Zwangskommutierungsblockes 10 mittels des Steuergeräts 17 frei. Beim Erreichen bestimmter Steuerwinkelwerte stoppt der Steuerwinkelbegrenzer 16 den Vorgabeblock 14 und der Pufferverteiler 15 ermöglicht über den Wähler 5 das Umschalten des Schalters von Position 2 in eine andere Position. Danach vergleicht der Informationsverarbeitungsblock 12 die Ist- und die Soll-Bremskraft. Besteht eine Differenz zwischen beiden Bremskraftwerten, so werden die Steuerwinkelwerte vom Steuerwinkelvorgabeblock 13 an der vorderen und hinteren Flanke der Spannung erneut bestimmt. Der Steuerwinkelveränderungs-Vorgabeblock 14 gibt die notwendigen Änderungen vor; der Steuerwinkelbegrenzer 16 sorgt dafür, daß die Winkelwerte innerhalb der vorgegebenen Grenzen bleiben. Der Steuerwinkelbegrenzer 16 gibt über den Pufferverteiler 15 dem Steuerwinkelverändungs-Vorgabeblock 14 die Steuerung der Thyristoren des Umrichters 7 und des Zwangskommutierungsblockes 10 mittels des Steuergerätes 17 oder zur Steuerung des Umschalters 4 mit Hilfe des Wählers 5 frei. Bei Erreichen der Vorgabe stoppt der Informationsverarbeitungsblock 12 über den Pufferverteiler 15 den Umschalter 4.

## Patentanspruch

Speiseanordnung für wechselstromgespeiste Gleichstromzugantriebe,
mit einem an den Stromabnehmer (2) angeschlossenen Spartransformator (3), der einen von einem Wähler (5) angetriebenen Positionsumschalter (4) aufweist,
mit einem primärseitig an den Positionsumschalter (4) angeschlossenen Transformator (6) mit festem Übersetzungsverhältnis,
mit einem wechselstromseitig an die Sekundärwicklung des Transformators (6) angeschlossenen Thyristor-Brücken-Umrichter (7), dessen Gleichstromseite an einen mit einer Drossel (8) in Reihe geschalteten Fahrmotor (9) angeschlossen ist,
mit einem Informationsverarbeitungsblock (12), dessen erster und zweiter Eingang an den Fahrschalter (11) bzw. an die Sekundärwicklung des Transformators (6) angeschlossen sind,
dadurch gekennzeichnet,
daß ein dritter Eingang des Informationsverarbeitungsblockes (12) an den Anker des Fahrmotors (9) angeschlossen ist,
daß ein erster Ausgang des Informationsverarbeitungsblocks (12) an einen Steuerwinkelbestimmungsblock (13) zur Bestimmung der Steuerwinkel für die Thyristoren des Umrichters (7) an der vorderen und hinteren Front der Spannung ($U_2$) des Transformators (6) geführt ist,
daß der Ausgang des Steuerwinkelbestimmungsblocks (13) an einen ersten Eingang eines Steuerwinkelveränderungs Vorgabeblockes (14) angeschlossen ist,
daß ein erster Ausgang des Steuerwinkelveränderungs-Vorgabeblockes (14) an einen ersten Eingang eines Pufferverteilers (15) und ein zweiter Ausgang des Vorgabeblockes (14) an einen Steuerwinkelbegrenzer (16) angeschlossen sind,

wobei zwei Ausgänge des Steuerwinkelbegrenzers (16) an einen zweiten Eingang des Steuerwinkelveränderungs Vorgabeblockes (14) bzw. an einen zweiten Eingang des Pufferverteilers (15) geführt sind, an dessen dritten Eingang ein zweiter Ausgang des Informationsverarbeitungsblokkes (12) angeschlossen ist, und

wobei ein erster und ein zweiter Ausgang des Pufferverteilers (15) mit dem Wähler (5) bzw. einem Steuergerät (17) verbunden ist, dessen Ausgänge an die Steuerelektroden der Thyristoren des Umrichters (7) und an einen Zwangskommutierungsblock (10) geführt sind, der seinerseits parallel zur Gleichstromseite des Umrichters (7) geschaltet ist, und das die Thyristoren so steuert, daß im Augenblick der Umschaltung die Spannung am Fahrmotor unverändert bleibt.

**Revendication**

Dispositif d'alimentation pour des moteurs de train à courant continu alimentés en courant alternatif, comportant

un autotransformateur (3) raccordé au pantographe (2) et présentant un inverseur de position (4) actionné par un sélecteur (5),

un transformateur (6) raccordé du côté primaire à l'inverseur de position (4) et présentant un rapport de transformation fixe,

un convertisseur de fréquence thyristor-pont (7) qui est raccordé du côté alternatif à l'enroulement secondaire du transformateur (6) et dont le côté continu est raccordé à un moteur de traction (9) raccordé en série à une bobine de choc (8),

un bloc de traitement de l'information (12) dont les première et seconde entrées sont raccordées respectivement au combinateur de contrôle (11) et à l'enroulement secondaire du transformateur (6), caractérisé en ce que: une troisième entrée du bloc de traitement de l'information (12) est raccordée à l'induit du moteur de traction (9),

une première sortie du bloc de traitement de l'information (12) est dirigée vers un bloc de définition d'angle de retard à la commande (13) pour définir les angles de retard à la commande pour les thyristors du convertisseur de fréquence (7) sur les fronts avant et arrière de la tension $(U_2)$ du transformateur (6),

la sortie du bloc de définition d'angle de retard à la commande (13) est raccordée à une première entrée d'un bloc de prescription de modification d'angle de retard à la commande (14),

une première sortie du bloc de prescription de modification d'angle de retard à la commande (14) est raccordée à une première entrée d'un répartiteur tampon (15) et une seconde sortie du bloc de prescription (14) est raccordée à un limiteur d'angle de retard à la commande (16),

deux sorties du limiteur d'angle de retard à la commande (16) étant amenées respectivement à une seconde entrée du bloc de prescription de modification d'angle de retard à la commande (14) et à une seconde entrée du répartiteur tampon (15), tandis qu'à la troisième entrée de celui-ci est raccordée une seconde sortie du bloc de traitement de l'information (12), et

des première et seconde sorties du répartiteur tampon (15) étant reliées respectivement au sélecteur (5) et à un appareil de commande (17) dont les sorties sont amenées aux électrodes de commande des thyristors du convertisseur de fréquence (7) et à un bloc de commutation forcée (10) lui-même connecté parallèlement au côté continu du convertisseur de fréquence (7), et qui commande les thyristors de telle sorte que la tension appliquée au moteur de traction reste inchangé au moment de la commutation.

**Claim**

Apparatus for feeding direct current traction devices by an alternating current, comprising

an autotransformer (3) connected to the pantograph (2), comprising a position commutator (4) driven by a selector (5),

a transformer (6) with a fixed transformer ratio connected on its primary side to the position commutator (4),

a thyristor-bridge-converter (7) connected on its alternating current side to the secondary winding of the transformer (6), the direct current side of which converter is connected to a traction motor (9) series connected to a reactor (8),

an information processing block (12) the first and second inputs of which are connected to the traction switch (11) and to the secondary winding of the transformer (6), respectively,

characterized in that

a third input of the information processing block (12) is connected to the armature of the traction motor (9),

a first output of the information processing block (12) is connected to a control angle definition block (13) for defining the control angles for the thyristors of the converter (7) at the leading and trailing fronts of the voltage (U2) of the transformer (6),

the output of the control angle definition block (13) is connected to a first input of an angle control variation presetting block (14),

a first output of the angle control variation presetting block (14) is connected to a first input of a buffer distributor (15) and a second output of the presetting block (14) is connected to a control angle limiter (16),

whereby two outputs of the control angle limiter (16) are connected to a second input of the control angle variation presetting block (14) and to a second input of the buffer distributor (15), respectively, to the third input of which a second output of the information processing block (12) is connected, and

whereby a first and a second output of the buffer distributor (15) is connected to a selector (5) and a control device (17), respectively, the outputs of which control device are connected to the control electrodes of the thyristors of the converter (7) and to a forcedly commutating block (10) which for its part is connected parallel to the direct current side of the converter (7) and which controls the thyristors so that at the moment of switching over the voltage at the traction motor remains unchanged.